# EUROPÄISCHE PATENTSCHRIFT

(11) **EP 2 455 645 B1**
(45) Veröffentlichungstag und Bekanntmachung des Hinweises auf die Patenterteilung: **03.04.2013**
(21) Anmeldenummer: 10191506.4
(22) Anmeldetag: 17.11.2010
(51) Int. Cl.: F16L 37/00

(54) **Verbinder für die Verbindung von zumindest zwei Aufnahmeelementen für ein fluides Medium**
Connector for connecting at least two receiving elements for a fluid medium
Connecteur pour la connexion d'au moins deux éléments de réception de fluide

(43) Veröffentlichungstag der Anmeldung: 23.05.2012
(73) Patentinhaber: TI Automotive (Fuldabrück) GmbH, 34277 Fuldabrück (DE)
(72) Erfinder: Haeckel, Andre, 34513 Waldeck (DE); Ceblin, Ulrich, 34596 Bad Zwesten (DE)
(74) Vertreter: Rohmann, Michael

(56) Entgegenhaltungen:
- WO-A1-2010/023124
- WO-A1-2010/069636
- FR-A1- 2 478 161
- GB-A- 2 206 666
- JP-A- 2010 007 617
- US-A1- 2004 129 325
- US-A1- 2010 064 670

## Beschreibung

Die Erfindung betrifft einen Verbinder zur Verbindung von zumindest zwei Aufnahmeelementen für ein fluides Medium, beispielsweise zur Verbindung von zwei Rohrleitungen für ein fluides Medium, wobei der Verbinder ein erstes Anschlussende für den Anschluss eines ersten Aufnahmelementes und ein zweites Anschlussende für den Anschluss eines zweiten Aufnahmeelementes aufweist und wobei der Verbinder zwischen dem ersten und dem zweiten Anschlussende von dem fluiden Medium durchströmbar ist. Das fluide Medium kann dabei vom ersten zum zweiten Anschlussende hin strömen oder umgekehrt vom zweiten Anschlussende zum ersten Anschlussende hin strömen. Aufnahmeelement für ein fluides Medium meint im Rahmen der Erfindung insbesondere eine Rohrleitung zum Durchleiten eines fluiden Mediums oder einen Tank für ein fluides Medium oder ein Dosierelement für ein fluides Medium. Rohrleitungen meint dabei auch Schlauchleitungen bzw. Kunststoffschläuche. Bei Einsatz eines erfindungsgemäßen Verbinders für die Verbindung zumindest einer Rohrleitung wird dieser Verbinder nachfolgend auch als Rohrverbinder bezeichnet. Rohrleitungen sind zweckmäßigerweise in das erste Anschlussende bzw. in das zweite Anschlussende des Rohrverbinders einsteckbar und hier vorzugsweise arretierbar.

Rohrverbinder der vorstehend beschriebenen Art sind aus der Praxis in verschiedenen Ausführungsformen bekannt. - Insbesondere bei Rohrleitungen und Rohrverbindern für die Durchleitung von Wasser oder eines wässrigen Mediums besteht das Problem, dass bei niedrigen Temperaturen das fluide Medium unter Volumenausdehnung gefriert. Aufgrund dieser Volumenausdehnung bzw. wegen des damit einhergehenden Druckes können die Rohrleitungen und Rohrverbinder beschädigt oder sogar vollständig zerstört werden.

In der Praxis hat man bereits verschiedene Maßnahmen für die Lösung dieses Problems vorgeschlagen. Diese Maßnahmen sind aber zumeist nicht zufriedenstellend.

In Kraftfahrzeugen wird das so genannte SCR-Verfahren (Selective Catalytic Reduction) eingesetzt, um den Stickstoffgehalt der Abgase zu reduzieren. Im Rahmen dieses SCR-Verfahrens wird eine wässrige Harnstofflösung verwendet. Insbesondere auch bei dieser wässrigen Harnstofflösung tritt das oben geschilderte Problem auf. Die wässrige Harnstofflösung gefriert bei niedrigen Temperaturen analog zu Wasser unter Volumenausdehung und durch die entsprechende Druckerhöhung können Rohrleitungen, Verbinder und dergleichen des SCR-Systems beschädigt oder vollständig zerstört werden. Aus der Praxis ist es bekannt, bei diesen SCR-Systemen die medienführenden Rohrleitungen nach dem Abstellen des Kraftfahrzeuges leer zu saugen. Ein Einfrieren des wässrigen Mediums in den Rohrleitungen wird damit ausgeschlossen. Diese Verfahrensweise ist aber aufwendig und fehleranfällig.

Aus GB 2 206 666 A ist ein Verbinder zur Verbindung von zumindest zwei Aufnahmeelementen für ein fluides Medium bekannt. Der Verbinder weist ein erstes Anschlussende für den Anschluss eines ersten Aufnahmeelementes und ein zweites Anschlussende für den Anschluss eines zweiten Aufnahmeelementes auf. Der Verbinder ist zwischen dem ersten und dem zweiten Anschlussende von dem fluiden Medium durchströmbar, wobei der Verbinder zwischen dem ersten und dem zweiten Anschlussende eine Druckausgleichskammer aufweist. In der Druckausgleichskammer ist ein kompressibler Einsatz angeordnet, wobei dieser kompressible Einsatz bereichsweise an der Innenwand der Druckausgleichskammer anliegt. Bei einer temperaturbedingten Volumenausdehnung des fluiden Mediums ist der kompressible Einsatz komprimierbar.

Der Erfindung liegt das technische Problem zugrunde, einen Verbinder bzw. Rohrverbinder der eingangs genannten Art anzugeben, mit dessen Hilfe die vorstehend geschilderten Probleme vermieden werden können. Die Erfindung bezieht sich dabei insbesondere auf einen Verbinder für die Verbindung von Aufnahmeelementen für eine wässrige Harnstofflösung, insbesondere im Rahmen eines SCR-Systems.

Zur Lösung dieses technischen Problems lehrt die Erfindung gemäβ Anspruch 1 einen Verbinder zur Verbindung von zumindest zwei Aufnahmeelementen für ein fluides Medium, beispielsweise Rohrverbinder zur Verbindung von zwei Rohrleitungen für ein fluides Medium, insbesondere für eine Harnstofflösung, wobei der Verbinder ein erstes Anschlussende für den Anschluss eines ersten Aufnahmeelementes und ein zweites Anschlussende für den Anschluss eines zweiten Aufnahmeelementes aufweist, wobei der Verbinder zwischen dem ersten und dem zweiten Anschlussende von dem fluiden Medium durchströmbar ist,
wobei der Verbinder zwischen dem ersten und dem zweiten Anschlussende eine Druckausgleichskammer aufweist, wobei in der Druckausgleichskammer ein kompressibler Einsatz angeordnet ist,
wobei der kompressible Einsatz bereichsweise an der Innenwand der Druckausgleichskammer anliegt, wobei zwischen der Innenwand der Druckausgleichskammer und dem kompressiblen Einsatz zumindest ein Längskanal, vorzugsweise eine Mehrzahl von Längskanälen für eine Fluidverbindung zwischen dem ersten und dem zweiten Anschlussende vorgesehen ist,
wobei die Druckausgleichskammer die über ihren Innenumfang umlaufende Innenwand sowie eine erste Stirnwand und eine zweite Stirnwand aufweist und
wobei zwischen dem kompressiblen Einsatz und der ersten Stirnwand und zwischen dem kompressiblen Einsatz und der zweiten Stirnwand zumindest ein Querkanal, bevorzugt mehrere Querkanäle für eine Fluidverbindung mit dem zumindest einen Längskanal, bevorzugt mit der Mehrzahl von Längskanälen vorgesehen ist/sind
und wobei bei einer temperaturbedingten Volumenausdehnung des fluiden Mediums der kompressible Einsatz komprimierbar ist, insbesondere zur Mitte der Druckausgleichskammer hin komprimierbar ist.

Dass der zumindest eine Längskanal für eine Fluidverbindung zwischen dem ersten und dem zweiten Anschlussende vorgesehen ist, meint im Rahmen der Erfindung, dass das fluide Medium über den Längskanal von dem ersten zu dem zweiten Anschlussende und umgekehrt strömen kann. Mit der temperaturbedingten Volumenausdehnung des fluiden Mediums ist insbesondere eine Volumenausdehnung im Zuge des Gefrierens des fluiden Mediums gemeint.

Es liegt im Rahmen der Erfindung, dass der erfindungsgemäße Verbinder aus Kunststoff bzw. im Wesentlichen aus Kunststoff besteht. Nach einer bevorzugten Ausführungsform der Erfindung besteht das Gehäuse des Verbinders aus Polyamid und vorzugsweise aus glasfaserverstärktem Polyamid. Das Gehäuse des Verbinders kann aber auch insbesondere aus Polyphthalamid (PPA) bzw. aus glasfaserverstärktem Polyphthalamid oder aus einem Fluorkunststoff bzw. aus glasfaserverstärktem Fluorkunststoff bestehen. Zweckmäßigerweise wird das Material für das Gehäuse des Verbinders mit der Maßgabe gewählt, dass eine stoffschlüssige Verbindung des Gehäuses mit einer anzuschließenden aus Kunststoff bestehenden Rohrleitung möglich ist. Die stoffschlüssige Verbindung wird dabei bevorzugt durch ein Schweißverfahren und insbesondere durch Rotationsschweißen realisiert. - Bei dem Verbinder handelt es sich vorzugsweise um einen so genannten Schnellverbinder (Quick Connector).

Es liegt im Rahmen der Erfindung, dass der Verbinder in Längsrichtung von dem fluiden Medium, insbesondere von der Harnstofflösung durchströmt wird. Zweckmäßigerweise besteht der Verbinder im Wesentlichen aus zylinderförmigen Abschnitten, die in seiner Längsrichtung hintereinander angeordnet sind. Vorzugsweise sind erstes Anschlussende, Druckausgleichskammer und zweites Anschlussende in Längsrichtung des Verbinders hintereinander angeordnet. Empfohlenermaßen erstreckt sich eine in Längsrichtung des Verbinders verlaufende Längsachse durch das erste Anschlussende und/oder durch die Druckausgleichskammer und/oder durch das zweite Anschlussende und besonders bevorzugt zentral mittig durch das erste Anschlussende und/oder durch die Druckausgleichskammer und/oder durch das zweite Anschlussende.

Zweckmäßigerweise ist die Druckausgleichskammer zylinderförmig ausgebildet und bevorzugt ist auch der kompressible Einsatz zylinderförmig bzw. im Wesentlichen zylinderförmig ausgebildet. Die Druckausgleichskammer besteht vorzugsweise aus Kunststoff und insbesondere aus einem glasfaserverstärkten Kunststoff. In Bezug auf die für die Druckausgleichskammer bevorzugt ausgewählten Materialien kann auf die oben zu dem Gehäuse des Verbinders angegebenen Materialien verwiesen werden. Die bevorzugt aus Kunststoff bestehende Druckausgleichskammer ist empfohlenermaßen aus mehreren Teilen, zweckmäßigerweise aus zwei Teilen zusammengefügt, wobei die Teile über ein Schweißverfahren miteinander verbunden wurden.

Wie vorstehend bereits erwähnt ist nach besonders bevorzugter Ausführungsform der Erfindung das fluide Medium eine Harnstofflösung bzw. eine wässrige Harnstofflösung. Der erfindungsgemäße Verbinder bzw. die daran angeschlossenen Aufnahmeelemente werden empfohlenermaßen in einem SCR-System eingesetzt. In einem solchen SCR-System hat sich die erfindungsgemäße Lösung besonders bewährt.

Es liegt im Rahmen der Erfindung, dass der in der Druckausgleichskammer angeordnete kompressible Einsatz reversibel verformbar ist. Bei einer Volumenausdehnung aufgrund des Gefrierens des fluiden Mediums wird der kompressible Einsatz komprimiert und bei einer anschließenden Volumenabnahme aufgrund des Auftauens nimmt der kompressible Einsatz vorzugsweise wieder seine ursprüngliche Form an. Zweckmäßigerweise besteht der kompressible Einsatz aus einem elastischen Material, insbesondere einem elastischen Kunststoffmaterial.

Gemäß besonders bevorzugter Ausführungsform der Erfindung besteht der kompressible Einsatz aus einem Kunststoffschaum, vorzugsweise aus einem geschlossenzelligen Kunststoffschaum. Zweckmäßigerweise besteht der kompressible Einsatz aus einem Kunststoffschaum aus Kautschuk, besonders bevorzugt aus einem Kunststoffschaum aus EPDM (Ethylen-Propylen-DienKautschuk). Es liegt im Rahmen der Erfindung, dass der kompressible Einsatz zu mehr als 50 Volumen-%, bevorzugt zu mehr als 65 Volumen-% und besonders bevorzugt zu mehr als 80 Volumen-% aus einem Kunststoffschaum, insbesondere aus einem geschlossenzelligen Kunststoffschaum und empfohlenermaßen aus einem geschlossenzelligen Kunststoffschaum aus Kautschuk bzw. EPDM besteht. Besonders bewährt hat sich eine Ausführungsform, bei der der kompressible Einsatz zu mehr als 90 Volumen-%, bevorzugt zu mehr als 95 Volumen-% aus geschlossenzelligem EPDM-Kunststoffschaum besteht. Es empfiehlt sich, dass die Oberfläche des kompressiblen Einsatzes geschlossen ausgebildet ist bzw. von einer geschlossenen Außenhaut gebildet wird.

Gemäß bevorzugter Ausführungsvariante der Erfindung weist das Material des kompressiblen Einsatzes eine Dichte von 0,5 bis 0,7 g/cm³, insbesondere eine Dichte von 0,55 bis 0,65 g/cm³ auf. - Nach sehr empfohlener Ausführungsform der Erfindung ist der kompressible Einsatz kompakt ausgebildet. Kompakt meint dabei, dass der kompressible Einsatz keine Hohlräume bzw. keine größeren Hohlräume aufweist. Wenn der kompressible Einsatz nach bevorzugter Ausführungsform aus einem Kunststoffschaum, insbesondere aus einem geschlossenzelligen Kunststoffschaum besteht, weist der kompressible Einsatz außer den Poren bzw. Zellen des Schaums keine Hohlräume bzw. keine größeren Hohlräume auf.

Es empfiehlt sich, dass der kompressible Einsatz eine Härte von 2 bis 25 Shore A, bevorzugt von 3 bis 20 Shore A, sehr bevorzugt von 4 bis 18 Shore A (Härte nach DIN 53505 gemessen) aufweist. Gemäß bewährter Ausführungsform der Erfindung weist der kompressible Einsatz einen Druckverformungsrest (DIN 53572, 22 h, 70 °C, 50 % Verformung) von 0 bis 55 %, bevorzugt von 20 bis 50 % und sehr bevorzugt von 25 bis 47 % auf.

Nach einer bevorzugten Ausführungsform der Erfindung liegt der kompressible Einsatz bereichsweise unter Vorspannung an der Innenwand der Druckausgleichskammer an. - Es liegt im Rahmen der Erfindung, dass die Längskanäle über den Umfang des kompressiblen Einsatzes verteilt angeordnet sind, wobei die Längskanäle durch Längsstege voneinander getrennt sind. Gemäß einer empfohlenen Ausführungsvariante stehen die Längsstege aus der Innenwand der Druckausgleichskammer vor. Es hat sich bewährt, dass der kompressible Einsatz - vorzugsweise unter Vorspannung - anliegt. Zweckmäßigerweise sind die Längskanäle in die Innenwand der Druckausgleichskammer eingearbeitet bzw. eingelassen. Bevorzugt weisen die über den Umfang der Innenwand bzw. über den Umfang des kompressiblen Einsatzes verteilten Längskanäle gleiche Abstände bzw. im Wesentlichen gleiche Abstände voneinander auf. Zweckmäßigerweise haben dann die Längsstege die gleiche Breite bzw. im Wesentlichen die gleiche Breite. Es liegt im Rahmen der Erfindung, dass sich die Längskanäle und Längsstege in Längsrichtung bzw. in Richtung der Längsachse L des Verbinders erstrecken. Empfohlenermaßen sind die Längskanäle und Längsstege parallel bzw. im Wesentlichen parallel zu der Längsachse L des Verbinders angeordnet. Vorzugsweise sind mindestens zwei, bevorzugt mindestens drei und sehr bevorzugt mindestens vier Längskanäle vorgesehen.

Wie oben bereits dargelegt, ist nach empfohlener Ausführungsform der Erfindung die Druckausgleichskammer und/oder der kompressible Einsatz zylinderförmig ausgebildet. Nach einer Ausführungsvariante stehen die die Längskanäle voneinander trennenden Längsstege aus der zylinderförmigen Innenwand der Druckausgleichskammer vor. Es liegt im Rahmen der Erfindung, dass der kompressible Einsatz koaxial in der Druckausgleichskammer angeordnet ist und dass die Druckausgleichskammer und der kompressible Einsatz eine gemeinsame zentralmittige Längsachse haben.

Erfindungsgemäß weist die Druckausgleichskammer die über ihren Innenumfang umlaufende Innenwand sowie eine erste Stirnwand und eine zweite Stirnwand auf und dass zwischen dem kompressiblen Einsatz und der ersten Stirnwand und zwischen dem kompressiblen Einsatz und der zweiten Stirnwand zumindest einen Querkanal, bevorzugt mehrere Querkanäle für eine Fluidverbindung mit dem zumindest einen Längskanal, bevorzugt mit der Mehrzahl von Längskanälen vorgesehen ist/sind. Vorzugsweise ist dabei die erste Stirnwand dem ersten Anschlussende und die zweite Stirnwand dem zweiten Anschlussende des Verbinders zugeordnet. Zweckmäßigerweise ist die Druckausgleichskammer zylinderförmig ausgebildet und dann bildet die Innenwand den Zylindermantel und die beiden Stirnwände bilden die Oberflächen des Zylinders. Dass in der ersten und/oder der zweiten Stirnwand Querkanäle für eine Fluidverbindung mit den Längskanälen vorgesehen sind, meint im Rahmen der Erfindung, dass das fluide Medium über die Querkanäle zu den Längskanälen strömen kann bzw. von den Längskanälen in die Querkanäle strömen kann. Es liegt im Rahmen der Erfindung, dass sowohl in der ersten Stirnwand als auch in der zweiten Stirnwand eine Mehrzahl von Querkanälen vorgesehen ist. Zweckmäßigerweise verlaufen die Querkanäle quer und bevorzugt senkrecht bzw. im Wesentlichen senkrecht zu den Längskanälen. Nach einer bevorzugten Ausführungsvariante sind die Querkanäle sternförmig oder kreuzförmig an einer Stirnwand angeordnet. Vorzugsweise entspricht die Anzahl der an einer Stirnwand angeordneten Querkanäle der Anzahl der Längskanäle zwischen Innenwand und kompressiblem Einsatz. Es liegt im Rahmen der Erfindung, dass die Querkanäle unmittelbar mit den Längskanälen verbunden sind. Je nach der Strömungsrichtung des fluiden Mediums kann das fluide Medium über die Querkanäle der ersten Stirnwand in die Längskanäle strömen und von den Längskanälen in die Querkanäle der zweiten Stirnwand oder umgekehrt.

Eine empfohlene Ausführungsform der Erfindung ist dadurch gekennzeichnet, dass eine unmittelbar an die Druckausgleichskammer angeschlossene Fluidleitung des ersten Anschlussendes und/oder eine unmittelbar an die Druckausgleichskammer angeschlossene Fluidleitung des zweiten Anschlussendes einen Innendurchmesser d aufweist, der kleiner ist als die Hälfte, vorzugsweise kleiner ist als ein Drittel, bevorzugt kleiner ist als ein Viertel und sehr bevorzugt kleiner ist als ein Fünftel des Innendurchmessers D der Druckausgleichskammer. Der Innendurchmesser d der Fluidleitungen wird dabei senkrecht zu ihrer Längsachse bzw. zu der Strömungsrichtung gemessen. Der Innendurchmesser D der Druckausgleichskammer wird senkrecht zur Längsachse, bevorzugt senkrecht zur Zylinderachse der Druckausgleichskammer, und zwar vorzugsweisse im Bereich der Längsstege gemessen. Es liegt im Rahmen der Erfindung, dass zumindest eine Fluidleitung, bevorzugt beide Fluidleitungen über die Querkanäle mit den Längskanälen unmittelbar verbunden ist/sind.

Das Verhältnis der Länge I des kompressiblen Einsatzes (in Richtung der Längsachse des kompressiblen Einsatzes bzw. der Druckausgleichskammer gemessen) zum Außendurchmesser A des kompressiblen Einsatzes beträgt 1,1 bis 1,5 und bevorzugt 1,25 bis 1,35. Der Außendurchmesser A des kompressiblen Einsatzes wird dabei senkrecht zu der genannten Längsachse im Bereich der Längskanäle gemessen. - Es empfiehlt sich, dass das Verhältnis des Außendurchmessers A des kompressiblen Einsatzes im Bereich der Längskanäle zur Höhe h der Längskanäle 20 bis 50, vorzugsweise 25 bis 45, bevorzugt 30 bis 40 und sehr bevorzugt 32 bis 38 beträgt. Höhe h der Längskanäle meint dabei den Abstand des kompressiblen Einsatzes von der Innenwand der Druckausgleichskammer im Bereich der Längskanäle. - Empfohlenermaßen beträgt das Verhältnis des Außendurchmessers A des kompressiblen Einsatzes zur Breite b der Längskanäle 1,5 bis 3, 5, zweckmäßigerweise 1,8 bis 2,8 bevorzugt 2,0 bis 2,6 und sehr bevorzugt 2,1 bis 2,5. Die Breite b der Längskanäle wird dabei quer zur Länge I des kompressiblen Einsatzes gemessen. - Empfohlenermaßen erstrecken sich die Längskanäle über die gesamte Länge I des kompressiblen Einsatzes, und zwar zweckmäßigerweise linear und bevorzugt parallel zur Längsachse des kompressiblen Einsatzes bzw. der Druckausgleichskammer.

Gegenstand der Erfindung ist auch eine Rohrverbinderanordnung mit zumindest einer Rohrleitung und zumindest einem an einem Ende der Rohrleitung angeschlossenen Rohrverbinder der vorstehend beschriebenen Art. Nach einer bevorzugten Ausführungsform ist zumindest eine Rohrleitung vorgesehen und an jedem Ende dieser Rohrleitung ist ein erfindungsgemäßer Rohrverbinder der vorstehend beschriebenen Art angeschlossen. Die Rohrleitung verbindet dabei also zwei erfindungsgemäße Rohrverbinder. Es liegt im Rahmen der Erfindung, dass an den jeweils anderen beiden Enden der Rohrverbinder jeweils eine weitere Rohrleitung angeschlossen ist. Das beidseitige Vorsehen eines Rohrverbinders an jedem Ende der Rohrleitung hat sich im Hinblick auf die Lösung des technischen Problems bzw. im Hinblick auf einen effektiven Frostschutz der Rohrleitung besonders bewährt.

Eine bevorzugte Ausführungsform der Erfindung ist dadurch gekennzeichnet, dass der Rohrverbinder an einem Anschlussende eine Aufnahme für eine Rohrleitung aufweist und dass diese Aufnahme für eine stoffschlüssige Verbindung, insbesondere für eine stoffschlüssige Verbindung über ein Schweißverfahren, vorzugsweise ein Rotationsschweißverfahren, eingerichtet ist. Es liegt dabei im Rahmen der Erfindung, dass zumindest die stoffschlüssig zu verbindenden Abschnitte von Rohrverbinder und Rohrleitung aus einem Kunststoff bestehen, wobei diese Kunststoffe entweder identisch oder zumindest für die genannte stoffschlüssige Verbindung kompatibel sind. Die Anbindung der Rohrleitung an dem Anschlussende kann aber auch durch ein Aufschieben der Rohrleitung auf ein Dornprofil oder durch Vercrimpung realisiert werden.

Gemäß einer empfohlenen Ausführungsvariante weist der Rohrverbinder an einem Anschlussende eine weibliche Kupplungsaufnahme für die Aufnahme eines männlichen Adapters bzw. Steckers einer Rohrleitung auf. Grundsätzlich könnte dieses Anschlussende aber auch mit einem männlichen Kupplungsteil bzw. Adapter ausgerüstet sein. Dabei handelt es sich dann vorzugsweise um einen Schnellkupplungsadapter vom Typ SAE J2044.

Der Erfindung liegt die Erkenntnis zugrunde, dass mit einem erfindungsgemäßen Verbinder bzw. mit einer erfindungsgemäßen Rohrverbinderanordnung temperaturbedingte Volumenausdehnungen des fluiden Mediums in den angeschlossenen Aufnahmeelementen bzw. in dem Rohrverbinder einfach, funktionssicher und effektiv ausgeglichen werden können. Beschädigungen oder Zerstörungen der Aufnahmeelemente oder des Rohrverbinders können mit den erfindungsgemäßen Maßnahmen wirksam vermieden werden. Hervorzuheben ist, dass sich der erfindungsgemäße Verbinder bzw. die erfindungsgemäße Rohrverbinderanordnung, insbesondere in SCR-Systemen mit wässrigen Harnstofflösungen, besonders effektiv einsetzen lässt. Zu betonen ist weiterhin, dass der erfindungsgemäße Erfolg mit relativ einfachen und kostengünstigen Maßnahmen erreicht werden kann.

Nachfolgend wird die Erfindung anhand einer lediglich ein Ausführungsbeispiel darstellenden Zeichnung näher erläutert. Es zeigen in schematischer Darstellung:
- Fig. 1: eine Seitenansicht eines erfindungsgemäßen Rohrverbinders im Schnitt,
- Fig. 2: ein Schnitt A-A durch den Gegenstand nach Fig. 1 und
- Fig. 3: ein perspektivischer Schnitt durch die Druckausgleichskammer des Gegenstandes gemäß Fig. 1.

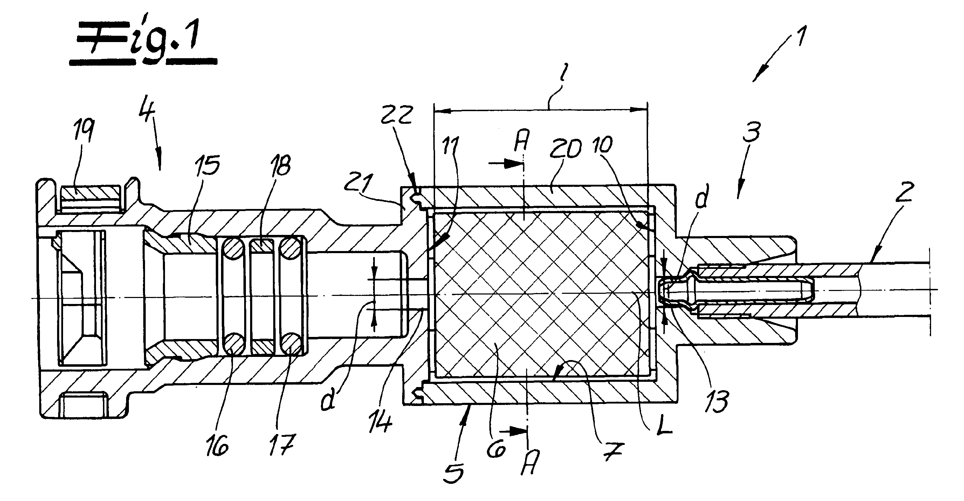

Die Figuren zeigen einen Verbinder 1 zur Verbindung von Aufnahmeelementen für ein fluides Medium. Bei dem nicht dargestellten fluiden Medium handelt es sich vorzugsweise und im Ausführungsbeispiel um eine wässrige Harnstofflösung und der dargestellte Verbinder 1 wird zweckmäßigerweise und im Ausführungsbeispiel im Rahmen eines SCR-Systems für ein Kraftfahrzeug eingesetzt. Im Ausführungsbeispiel nach Fig. 1 ist an einem ersten Anschlussende 3 eine Rohrleitung 2 angeschlossen. Auch an dem zweiten Anschlussende 4 könnte eine dort nicht dargestellte Rohrleitung 2 angeschlossen sein. Allerdings ist es auch möglich, hier ein anderes Aufnahmeelement in Form eines nicht dargestellten Tanks oder eines nicht dargestellten Dosierelementes anzuschließen. Der Verbinder 1 kann zwischen dem ersten Anschlussende 3 und dem zweiten Anschlussende 4 von dem fluiden Medium, vorzugsweise von der Harnstofflösung, durchströmt werden.

Erfindungsgemäß weist der Verbinder 1 zwischen dem ersten Anschlussende 3 und dem zweiten Anschlussende 4 eine Druckausgleichskammer 5 auf, in der ein kompressibler Einsatz 6 angeordnet ist. Bevorzugt und im Ausführungsbeispiel besteht der kompressible Einsatz 6 aus einem geschlossenzelligen EPDM-Kunststoffschaum. Der kompressible Einsatz 6 ist dabei kompakt ausgebildet. Kompakt meint hier, dass außer den Poren bzw. Zellen des Kunststoffschaums keine weiteren Hohlräume in dem kompressiblen Einsatz 6 ausgebildet sind. Die Druckausgleichskammer 5 ist empfohlenermaßen und im Ausführungsbeispiel zylinderförmig ausgebildet. Auch der in der Druckausgleichskammer 5 eingesetzte bzw. angeordnete kompressible Einsatz 6 ist im Wesentlichen zylinderförmig ausgebildet.

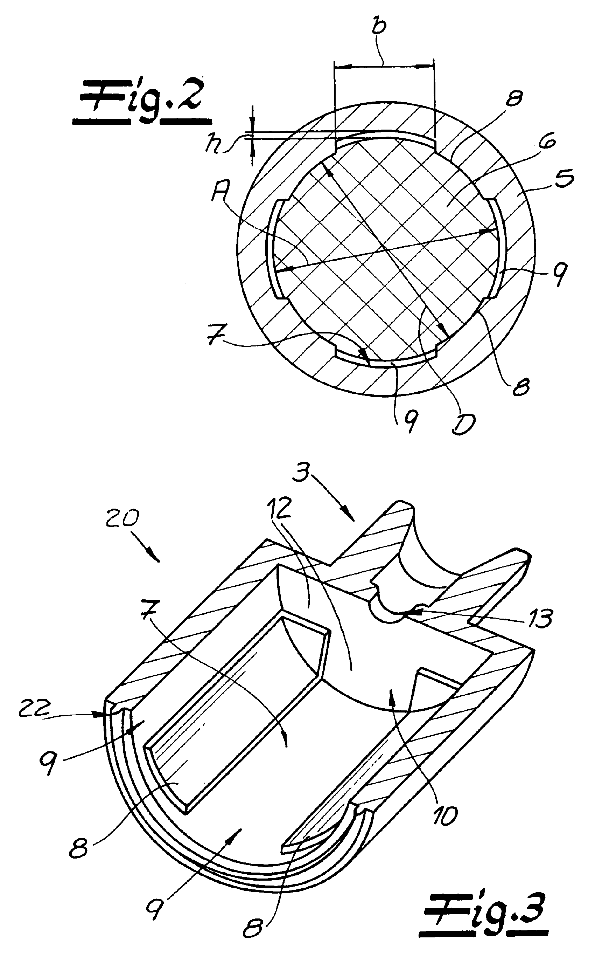

In der Fig. 2 ist erkennbar, dass der kompressible Einsatz 6 bereichsweise an der Innenwand 7 der Druckausgleichskammer 5 anliegt, und zwar im Bereich von aus der Innenwand 7 vorstehenden Längsstegen 8. In Fig. 2 ist weiterhin erkennbar, dass zwischen der Innenwand 7 der zylinderförmigen Druckausgleichskammer 5 und dem kompressiblen Einsatz 6 eine Mehrzahl von Längskanälen 9 für eine Fluidverbindung zwischen dem ersten und dem zweiten Anschlussende 3, 4 vorgesehen ist. Der kompressible Einsatz 6 liegt im Bereich der Längsstege 8 im Übrigen vorzugsweise und im Ausführungsbeispiel unter Vorspannung an der Innenwand 7 der Druckausgleichskammer 5 an. - Bei einer temperaturbedingten Volumenausdehnung des fluiden Mediums - insbesondere bei einem Gefrieren des fluiden Mediums unter Volumenausdehnung - ist der kompressible Einsatz 6 zur Mitte der Druckausgleichskammer 5 hin komprimierbar. Empfohlenermaßen ist der kompressible Einsatz 6 dabei reversibel verformbar.

Fig. 2 zeigt, dass im Ausführungsbeispiel vier Längskanäle 9 mit gleichem Abstand voneinander über den Umfang des kompressiblen Einsatzes 6 verteilt angeordnet sind, wobei diese Längskanäle 9 durch die vier Längsstege 8 der Innenwand 7 voneinander getrennt sind. Vorzugsweise und im Ausführungsbeispiel verlaufen die Längskanäle 9 und die Längsstege 8 parallel zur Längsachse L des Verbinders 1. Der kompressible Einsatz 6 ist koaxial in die Druckausgleichskammer 5 eingesetzt, so dass der kompressible Einsatz 6 und die Druckausgleichskammer 5 die gleiche zentralmittige Längsachse L haben.

Gemäβ der Erfindung weist die Druckausgleichskammer 5 zum einen die über ihren Innenumfang umlaufende Innenwand 7 auf sowie eine dem ersten Anschlussende 3 zugeordnete erste Stirnwand 10 und eine dem zweiten Anschlussende 4 zugeordnete zweite Stirnwand 11 auf. Im Ausführungsbeispiel bildet die Innenwand 7 somit den Zylindermantel und die Stirnwände 10, 11 bilden die Oberflächen des zylinderförmigen Hohlraumes der Druckausgleichskammer 5. Zwischen dem kompressiblen Einsatz 6 und der ersten Stirnwand 10 sowie zwischen dem kompressiblen Einsatz 6 und der zweiten Stirnwand 11 sind Querkanäle 12 für eine Fluidverbindung mit den Längskanälen 9 vorgesehen. Die Querkanäle 12 sind in den Stirnwänden 10, 11 ausgeformt und sind vorzugsweise und im Ausführungsbeispiel senkrecht zu den Längskanälen 9 angeordnet. Im Ausführungsbeispiel sind im Übrigen vier Querkanäle 12 an jeder Stirnwand 10, 11 kreuzförmig angeordnet. Die Querkanäle 12 sind unmittelbar mit den zugeordneten Längskanälen 9 verbunden.

Vorzugsweise und im Ausführungsbeispiel (Fig. 1) ist eine dem ersten Anschlussende 3 zugeordnete erste Fluidleitung 13 unmittelbar an die Druckausgleichskammer 5 angeschlossen und ist eine dem zweiten Anschlussende 4 zugeordnete zweite Fluidleitung 14 unmittelbar an die Druckauslgeichskammer 5 angeschlossen. Zweckmäßigerweise und im Ausführungsbeispiel entspricht die Längsachse dieser Fluidleitungen der zentralmittigen Längsaschse L des Verbinders 1. Beide Fluidleitungen weisen einen Innendurchmesser d auf, der empfohlenermaßen und im Ausführungsbeispiel kleiner ist als ein Viertel des Innendurchmessers D der Druckausgleichskammer 5. Der Innendurchmesser D der Druckausgleichskammer 5 wird dabei im Bereich der Längsstege 8 gemessen. Die Fluidleitungen 13, 14 sind im Übrigen über die Querkanäle 12 mit den Längskanälen 9 verbunden. Zweckmäßigerweise und im Ausführungsbeispiel erstrecken sich die Längskanäle über die gesamte Länge I des kompressiblen Einsatzes 6, und zwar zweckmäßigerweise linear und bevorzugt parallel zur Längsachse L des Verbinders 1.

Mit A wird im Übrigen der Außendurchmesser des kompressiblen Einsatzes 6 bezeichnet, der im Bereich der Längskanäle 9 gemessen wird. Die Höhe h der Längskanäle 9 entspricht dem Abstand des kompressiblen Einsatzes 6 von der Innenwand 7 der Druckausgleichskammer 5 im Bereich der Längskanäle 9. Mit b wird die Breite der Längskanäle 9 bezeichnet, die quer zur Länge I des kompressiblen Einsatzes gemessen wird.

Der in den Figuren dargestellte Verbinder 1 ist vorzugsweise und im Ausführungsbeispiel als Schnellverbinder (Quickconnector) ausgebildet. Das zweite Anschlussende 4 ist insbesondere für die Aufnahme eines Steckers bzw. Adapters eines Aufnahmeelementes bzw. einer Rohrleitung eingerichtet. In dem zweiten Anschlussende 4 ist ein äußeres Abstandselement 15, zwei als O-Ringe ausgebildete Dichtungselemente 16, 17 und ein zwischen den beiden Dichtungselementen 16, 17 angeordnetes inneres Abstandselement 18 vorgesehen (Fig. 1). Außerdem ist ein Halteelement 19 zum Arretieren des nicht dargestellten Steckers bzw. Adapters vorhanden.

In der Fig. 1 ist erkennbar, dass die hier dargestellte Rohrleitung 2 in einer Aufnahme des ersten Anschlussendes 3 eingesteckt ist. Vorzugsweise ist die Rohrleitung 2 mit diesem ersten Anschlussende 3 stoffschlüssig verbunden und bevorzugt wurde die stoffschlüssige Verbindung über ein Rotationsschweißverfahren hergestellt. Dazu bestehen das erste Anschlussende 3 und die Rohrleitung 2 zweckmäßigerweise aus für eine stoffschlüssige Verbindung kompatiblen Kunststoffen.

In Fig. 1 ist weiterhin erkennbar, dass das zweite Anschlussende 4 in Form einer weiblichen Kupplungsaufnahme für die Aufnahme eines männlichen Adapters bzw. Steckers einer Rohrleitung 2 eingerichtet ist. Grundsätzlich könnte am zweiten Rohrleitungsende 4 auch ein männliches Kupplungsteil, insbesondere in Form eines Adapters vom Typ SAE J2044 vorgesehen sein.

Der Fig. 1 entnimmt man fernerhin, dass die Druckausgleichskammer 5 vorzugsweise und im Ausführungsbeispiel zweiteilig ausgeführt ist. Die beiden Teile 20, 21 der Druckausgleichskammer 5 sind im Verbindungsbereich 22 empfohlenermaßen stoffschlüssig miteinander verbunden, insbesondere miteinander verschweißt. Es liegt dabei im Rahmen der Erfindung, dass die beiden Teile 20, 21 der Druckausgleichskammer 5 aus für eine stoffschlüssigere Verbindung kompatiblen Kunststoffen bestehen.

## Patentansprüche

1. Verbinder (1) zur Verbindung von zumindest zwei Aufnahmeelementen für ein fluides Medium, beispielsweise Rohrverbinder zur Verbindung von zwei Rohrleitungen für ein fluides Medium,
wobei der Verbinder (1) ein erstes Anschlussende (3) für den Anschluss eines ersten Aufnahmeelementes und ein zweites Anschlussende (4) für den Anschluss eines zweiten Aufnahmeelementes aufweist,
wobei der Verbinder (1) zwischen dem ersten und dem zweiten Anschlussende (3, 4) von dem fluiden Medium durchströmbar ist,
wobei der Verbinder (1) zwischen dem ersten und dem zweiten Anschlussende (3, 4) eine Druckausgleichskammer (5) aufweist, wobei in der Druckausgleichskammer (5) ein kompressibler Einsatz (6) angeordnet ist,
wobei der kompressible Einsatz (6) bereichsweise an der Innenwand (7) der Druckausgleichskammer (5) anliegt, wobei zwischen der Innenwand (7) der Druckausgleichskammer (5) und dem kompressiblen Einsatz (6) zumindest ein Längskanal (9), vorzugsweise eine Mehrzahl von Längskanälen (9) für eine Fluidverbindung zwischen dem ersten und dem zweiten Anschlussende (3, 4) vorgesehen ist,
wobei die Druckausgleichskammer (5) die über ihren Innenumfang umlaufende Innenwand (7) sowie eine erste Stirnwand (10) und eine zweite Stirnwand (11) aufweist und wobei zwischen dem kompressiblen Einsatz (6) und der ersten Stirnwand (10) und zwischen dem kompressiblen Einsatz (6) und der zweiten Stirnwand (11) zumindest ein Querkanal (12), bevorzugt mehrere Querkanäle (12) für eine Fluidverbindung mit dem zumindest einen Längskanal (9), bevorzugt mit der Mehrzahl von Längskanälen (9) vorgesehen ist/sind,
und wobei bei einer temperaturbedingten Volumenausdehnung des fluiden Mediums der kompressible Einsatz (6) komprimierbar ist, insbesondere zur Mitte der Druckausgleichskammer (5) hin komprimierbar ist.

2. Verbinder nach Anspruch 1, wobei der kompressible Einsatz (6) reversibel verformbar ist.

3. Verbinder nach einem der Ansprüche 1 oder 2, wobei der kompressible Einsatz (6) aus einem Kunststoffschaum, vorzugsweise aus einem geschlossenzelligen Kunststoffschaum besteht.

4. Verbinder nach einem der Ansprüche 1 bis 3, wobei der kompressible Einsatz (6) aus einem Kunststoffschaum aus Kautschuk, vorzugsweise aus einem Kunststoffschaum aus EPDM besteht.

5. Verbinder nach einem der Ansprüche 1 bis 4, wobei der kompressible Einsatz (6) kompakt ausgebildet ist.

6. Verbinder nach einem der Ansprüche 1 bis 5, wobei der kompressible Einsatz (6) eine Harte gemäβ DIN 53505 von 2 bis 25 Shore A, bevorzugt von 3 bis 20 Shore A und/oder einen Druckverformungsrest gemäβ DIN 53572, 22 h, 70 °C, 50 % Verformung von 0 bis 55 %, bevorzugt von 20 bis 50 % aufweist.

7. Verbinder nach einem der Ansprüche 1 bis 6, wobei der kompressible Einsatz (6) bereichsweise unter Vorspannung an der Innenwand (7) der Druckausgleichskammer (5) anliegt.

8. Verbinder nach einem der Ansprüche 1 bis 7, wobei die Längskanäle (9) über den Umfang des kompressiblen Einsatzes (6) verteilt angeordnet sind und wobei die Längskanäle (9) durch Längsstege (8) der Innenwand (7) der Druckausgleichskammer (5) voneinander getrennt sind.

9. Verbinder nach einem der Ansprüche 1 bis 8, wobei eine an die Druckausgleichskammer (5) angeschlossene Fluidleitung (13) des ersten Anschlussendes (3) und/oder eine an die Druckausgleichskammer (5) angeschlossene Fluidleitung (14) des zweiten Anschlussendes (4) einen Innendurchmesser d aufweist, der kleiner ist als die Hälfte, vorzugsweise kleiner ist als ein Drittel, bevorzugt kleiner ist als ein Viertel und sehr bevorzugt kleiner ist als ein Fünftel des Innendurchmessers D der Druckausgleichskammer.

10. Verbinder nach Anspruch 9, wobei zumindest eine Fluidleitung (13, 14) über den zumindest einen Querkanal (12) mit dem zumindest einen Längskanal (9), bevorzugt über mehrere Querkanäle (12) mit den Längskanälen (9) verbunden ist.

11. Verbinder nach einem der Ansprüche 1 bis 10, wobei die Druckausgleichskammer (5) aus mehreren Teilen (20, 21), bevorzugt aus zwei Teilen (20, 21) zusammengefügt ist und wobei die Teile (20, 21) stoffschlüssig miteinander verbunden sind.

12. Rohrverbinderanordnung mit zumindest einer Rohrleitung (2) und zumindest einem an einem Ende der Rohrleitung (2) angeschlossenen Verbinder (1) nach einem der Ansprüche 1 bis 11, vorzugsweise mit zwei Rohrverbindern nach einem der Ansprüche 1 bis 11, wobei an jedem Ende der Rohrleitung (2) ein Rohrverbinder (1) angeschlossen ist.

## Claims

1. A connector (1) for connecting at least two receiving elements for a fluid medium, for example a pipe connector for connecting two pipelines for a fluid medium,
wherein the connector (1) comprises a first connection end (3) for the connection of a first receiving element and a second connection end (4) for the connection of a second receiving element,
wherein the fluid medium can flow through the connector (1) between the first and the second connection end (3, 4),
wherein the connector (1) comprises a pressure equalisation chamber (5) between the first and the second connection end (3, 4), wherein a compressible insert (6) is disposed in the pressure equalisation chamber (5),
wherein the compressible insert (6) lies adjacent in sections to the inner wall (7) of the pressure equalisation chamber (5), wherein there is provided between the inner wall (7) of the pressure equalisation chamber (5) and the compressible insert (6) at least one longitudinal channel (9), preferably a plurality of longitudinal channels (9), for a fluid connection between the first and the second connection end (3, 4),
wherein the pressure equalisation chamber (5) comprises the inner wall (7) running around its inner periphery as well as a first end wall (10) and a second end wall (11) and wherein there is/are provided between the compressible insert (6) and the first end wall (10) and between the compressible insert (6) and the second end wall (11) at least one transverse channel (12), preferably a plurality of transverse channels (12), for a fluid connection to the at least one longitudinal channel (9), preferably to the plurality of longitudinal channels (9), and wherein the compressible insert (6) is compressible in the presence of a temperature-related volume expansion of the fluid medium, in particular is compressible towards the middle of the pressure equalisation chamber (5).

2. The connector according to claim 1, wherein the compressible insert (6) can be deformed reversibly.

3. The connector according to any one of claims 1 or 2, wherein the compressible insert (6) comprises a plastic foam, preferably a closed-cell plastic foam.

4. The connector according to any one of claims 1 to 3, wherein the compressible insert (6) comprises a plastic foam made of rubber, preferably a plastic foam made of EPDM.

5. The connector according to any one of claims 1 to 4, wherein the compressible insert (6) is constituted compact.

6. The connector according to any one of claims 1 to 5, wherein the compressible insert (6) has a hardness according to DIN 53505 of 2 to 25 Shore A, preferably of 3 to 20 Shore A and/or a permanent set according to DIN 53572, 22 h, 70°C, 50% deformation of 0 to 55%, preferably 20 to 50%.

7. The connector according to any one of claims 1 to 6, wherein the compressible insert (6) lies adjacent zonally under pretensioning against the inner wall (7) of the pressure equalisation chamber (5).

8. The connector according to any one of claims 1 to 7, wherein the longitudinal channels (9) are disposed distributed around the periphery of the compressible insert (6) and wherein the longitudinal channels (9) are separated from one another by longitudinal webs (8) of the inner wall (7) of the pressure equalisation chamber (5).

9. The connector according to any one of claims 1 to 8, wherein a fluid line (13) of the first connection end (3) connected to the pressure equalisation chamber (5) and/or a fluid line (14) of the second connection end (4) connected to the pressure equalisation chamber (5) has an internal diameter d, which is less than half, preferably less than a third, preferably less than a fourth and very preferably less than a fifth of internal diameter D of the pressure equalisation chamber.

10. The connector according to claim 9, wherein at least one fluid line (13, 14) is connected via the at least one transverse channel (12) to the at least one longitudinal channel (9), preferably via a plurality of transverse channels (12) to the longitudinal channels (9).

11. The connector according to any one of claims 1 to 10, wherein the pressure equalisation chamber (5) is assembled from a plurality of parts (20, 21), preferably from two parts (20, 21), and wherein the parts (20, 21) are connected to one another in a firmly bonded manner.

12. A pipe connector arrangement with at least one pipeline (2) and at least one connector (1) connected to an end of the pipeline (2) according to any one of claims 1 to 11, preferably with two pipe connectors according to any one of claims 1 to 11, wherein a pipe connector (1) is connected to each end of the pipeline (2).

## Revendications

1. Raccord (1) pour relier au moins deux éléments récepteurs d'un milieu fluide, par exemple raccord de tuyaux pour relier deux tuyauteries pour un milieu fluide,
le raccord (1) comportant une première extrémité de raccordement (3) pour raccorder un premier élément récepteur et une deuxième extrémité de raccordement (4) pour raccorder un deuxième élément récepteur,
entre la première et la deuxième extrémité de raccordement (3, 4), le raccord (1) pouvant être irrigué par le milieu fluide,
entre la première et la deuxième extrémité de raccordement (3, 4), le raccord (1) comportant une chambre compensatrice de pression (5), un insert (6) compressible étant disposé dans la chambre compensatrice de pression (5),
l'insert (6) compressible s'appuyant par zones sur la paroi interne (7) de la chambre compensatrice de pression (5), entre la paroi interne (7) de la chambre compensatrice de pression (5) et l'insert (6) compressible étant prévu au moins un canal longitudinal (9), de préférence une pluralité de canaux longitudinaux (9) pour une liaison par fluide entre la première et la deuxième extrémité de raccordement (3, 4),
la chambre compensatrice de pression (5) comportant la paroi interne (7) périphérique autour de son pourtour intérieur, ainsi qu'une première paroi frontale (10) et une deuxième paroi frontale (11) et entre l'insert (6) compressible et la première paroi frontale (10) et entre l'insert (6) compressible et la deuxième paroi frontale (11) étant prévu/s au moins un canal transversal (12), de préférence plusieurs canaux transversaux (12) pour une liaison par fluide avec l'au moins un canal longitudinal (9), de préférence avec la pluralité de canaux longitudinaux (9),
et lors d'une expansion de volume due à la température du milieu fluide, l'insert (6) compressible pouvant se comprimer, pouvant se comprimer notamment vers le centre de la chambre compensatrice de pression (5).

2. Raccord selon la revendication 1, l'insert (6) compressible étant déformable de manière réversible.

3. Raccord selon l'une quelconque des revendications 1 ou 2, l'insert (6) compressible étant constitué d'une mousse synthétique, de préférence d'une mousse en matière synthétique à alvéoles fermées.

4. Raccord selon l'une quelconque des revendications 1 à 3, l'insert (6) compressible étant constitué d'une mousse en matière synthétique en caoutchouc, de préférence d'une mousse en matière synthétique en EPDM.

5. Raccord selon l'une quelconque des revendications 1 à 4, l'insert (6) compressible étant conçu de manière compacte.

6. Raccord selon l'une quelconque des revendications 1 à 5, l'insert (6) compressible présentant une dureté selon DIN 53505 de 2 à 25 shore A, de préférence de 3 à 20 shore A et/ou un reste de déformation sous pression selon DIN 53572, 22h, 70°C, déformation à 50 % de 0 à 55 %, de préférence de 20 à 50 %.

7. Raccord selon l'une quelconque des revendications 1 à 6, l'insert (6) compressible s'appuyant par zones sous une précontrainte sur la paroi interne (7) de la chambre compensatrice de pression (5).

8. Raccord selon l'une quelconque des revendications 1 à 7, les canaux longitudinaux (9) étant disposés en étant distribués sur la périphérie de l'insert (6) compressible et les canaux longitudinaux (9) étant séparés les uns des autres par des listels (8) longitudinaux de la paroi interne (7) de la chambre compensatrice de pression (5).

9. Raccord selon l'une quelconque des revendications 1 à 8, un conduit à fluide (13) raccordé sur la chambre compensatrice de pression (5) de la première extrémité de raccordement (3) ou un conduit à fluide (14) raccordé sur la chambre compensatrice de pression (5) de la deuxième extrémité de raccordement (4) ayant un diamètre intérieur d qui est inférieur à la moitié, de préférence qui est inférieur à un tiers, préférentiellement qui est inférieur à un quart et de manière très préférentielle qui est inférieur à un cinquième du diamètre intérieur D de la chambre compensatrice de pression.

10. Raccord selon la revendication 9, au moins un conduit à fluide (13, 14) étant relié via l'au moins un canal transversal (12) avec l'au moins un canal longitudinal (9), de préférence via plusieurs canaux transversaux (12) avec les canaux longitudinaux (9).

11. Raccord selon l'une quelconque des revendications 1 à 10, la chambre compensatrice de pression (5) étant assemblée à partir de plusieurs pièces (20, 21), de préférence à partir de deux pièces (20, 21) et les pièces (20, 21) étant reliées ensemble par matière.

12. Dispositif de tuyauterie avec au moins une tuyauterie (2) et au moins un raccord (1) selon l'une quelconque des revendications 1 à 11, raccordé sur une extrémité de la tuyauterie (2), de préférence avec deux raccords de tuyaux selon l'une quelconque des revendications 1 à 11, un raccord de tuyaux (1) étant raccordé sur chaque extrémité de la tuyauterie (2).
